# EUROPÄISCHE PATENTSCHRIFT

(11) **EP 3 675 078 B1**
(45) Veröffentlichungstag und Bekanntmachung des Hinweises auf die Patenterteilung: **06.05.2026**
(21) Anmeldenummer: 19214790.8
(22) Anmeldetag: 10.12.2019
(51) Int. Cl.: G08G 1/16, G08B 13/196, B60R 1/00, B60R 25/31, B60R 25/30, B60R 25/102, B60R 25/10, B60W 30/09, B60Q 5/00, B60Q 1/52, B60D 1/01, B60D 1/62, B60Q 9/00, B60W 50/14, B60W 60/00, G08B 13/00

(54) **VERFAHREN ZUM ÜBERWACHEN EINES VOLLAUTONOMEN ODER TEILAUTONOMEN KRAFTFAHRZEUGS**
METHOD FOR MONITORING A FULLY OR PARTIALLY AUTONOMOUS MOTOR VEHICLE
PROCÉDÉ DE SURVEILLANCE D'UN VÉHICULE ENTIÈREMENT AUTONOME OU PARTIELLEMENT AUTONOME

(30) Priorität: 21.12.2018 DE 102018133381
(43) Veröffentlichungstag der Anmeldung: 01.07.2020
(73) Patentinhaber: MAN Truck & Bus SE, 80995 München (DE)
(72) Erfinder: Haider, Michael, 83126 Flintsbach (DE)
(74) Vertreter: v. Bezold & Partner Patentanwälte - PartG mbB

(56) Entgegenhaltungen:
- WO-A1-2004/031006
- DE-A1- 102005 018 487
- DE-A1- 102014 221 682
- DE-A1- 102015 002 618
- DE-A1- 102017 115 582

## Beschreibung

Die Erfindung betrifft ein Verfahren zum Überwachen eines teilautonomen oder vollautonomen Kraftfahrzeugs.

Ein aktueller Entwicklungstrend im Automobilbau ist der Ausbau von Fahrerassistenzsystemen und die Entwicklung hin zum autonomen Fahren eines Kraftfahrzeugs. Hierbei können die Systeme durch Sensorik soweit ausgebaut werden, dass das Kraftfahrzeug selbstständig innerhalb gewisser Voraussetzungen teil- oder sogar vollautonom fahren kann. Es ist auch möglich, dass zukünftig bspw. für den Gütertransport vollautonome, fahrerlose Kraftfahrzeuge eingesetzt werden können.

Federführend ist derzeit die Entwicklung bei Personenkraftwagen. Für Nutzfahrzeuge wie Lastkraftwagen oder Omnibusse können die Lösungen adaptiert werden. Hierbei wird vor allem bevorzugt auf das unfallfreie Fahren eines Kraftfahrzeugs in Hinblick auf den normalen Verkehrsfluss mit normalen Verkehrsteilnehmern entwickelt. D. h., es wird der Überlandverkehr und Stadtverkehr mit seinen Wechselwirkung wie z. B. Wetterbedingungen, Ampelkreuzungen, Seitenstraßenverkehr oder auch auf der Fahrbahn laufende Personen als Interaktion zwischen Kraftfahrzeug und Umwelt abgebildet.

Im Zuge der Entwicklung von autonomen Kraftfahrzeugen geht die Verantwortung eines sicheren Fahrzeugbetriebs vom Fahrer des Kraftfahrzeugs auf das autonome Fahrsystem über. Ein Aspekt im Themengebiet "autonomes Fahren" ist, dass im Zuge dieses neuen Technologiesprungs alte bekannte, aber vergessene Situationen, Mechanismen oder Abläufe wieder auftreten können.

Die Erfindung beruht u. a. auf der Erkenntnis, dass eine dieser Situationen oder Abläufe die laufende Kontrolle des Kraftfahrzeugs durch den Fahrer ist. Bspw. kann der Fahrer kontrollieren, ob nicht durch äußere Einwirkungen die Sicherheit des Fahrbetriebs gefährdet ist. Eine denkbare Gefährdung kann das unerlaubte Aufsteigen von Personen auf ein Nutzfahrzeug sein, die kostenlos irgendwohin befördert werden wollen. Dieser Fall wird heutzutage durch den Fahrer laufend kontrolliert und ist eine sehr wichtige Nebenerscheinung im Fahrbetrieb.

Da im Nutzfahrzeugbereich höhere Lasten als auch mehr Menschen transportiert werden, ist im Falle des autonomen Fahrens eine höhere Aufmerksamkeit notwendig als bspw. im PKW-Bereich. Z. B. können im Gefahrenfall Aktionen von blinden Passagieren zu schweren Unfällen und zu Regresshaftungen nach Unfällen gegenüber dem Hersteller oder Eigentümer des Kraftfahrzeugs führen.

Es ist ebenfalls denkbar, dass ein autonomes Kraftfahrzeug zum unerlaubten und kostenlosen Befördern von Ladegut verwendet wird, indem das Ladegut heimlich auf das autonome Kraftfahrzeug geladen wird. In dem Fall, in dem das Ladegut in einem nicht zur Beförderung des Ladeguts vorgesehenen und zugelassenen Bereichs des Kraftfahrzeugs abgelegt wird, können sich die gleichen Risiken wie bei einem unerlaubten Personentransport ergeben. Nachteilig am bekannten Stand der Technik kann damit sein, dass sich Personen oder Ladegüter unerlaubt von den teil- oder vollautonomen Kraftfahrzeugen transportieren lassen und damit ein erhebliches Unfallrisiko darstellen.

Die WO 2004/031006 A1 offenbart ein Fahrzeug-Einbruchalarmsystem für einen Alarm im Falle eines unbefugten Eindringens in eine Zone eines Fahrzeugs, mit einem Aktivator zum Aktivieren des Systems und mindestens einem Sensor, der so angeordnet ist, dass er eine in einer vertikalen Richtung innerhalb der Zone aufgebrachte Kraft erfasst. Der oder jeder Sensor ist mit einem Alarmgenerator gekoppelt, der so angeordnet ist, dass die Detektion einer Kraft über einem Schwellenwert durch den Sensor, wenn das System aktiviert ist, den Alarmgenerator in den Modus "Eindringling detektiert" schaltet, um einen Alarm zum Anzeigen der Anwesenheit eines Eindringlings in der Zone zu erzeugen.

Der Erfindung liegt die Aufgabe zu Grunde, ein Verfahren zu schaffen, mit dem teil- oder vollautonome Kraftfahrzeuge sicherer betrieben werden können.

Die Aufgabe wird gelöst durch die Merkmale des unabhängigen Anspruchs 1. Vorteilhafte Weiterbildungen sind in den abhängigen Ansprüchen und der Beschreibung angegeben.

Der Erfindung schafft ein Verfahren zum Überwachen eines vollautonomen oder teilautonomen Kraftfahrzeugs, vorzugsweise Nutzfahrzeugs, nach Anspruch 1.

Zweckmäßig kann durch das Verfahren verhindert werden, dass sich eine oder mehrere Personen oder Ladegüter während des Betriebs des Kraftfahrzeugs unerlaubt in dem vorbestimmten Bereich befinden, da dies aus mehreren Gründen problematisch sein kann. Einerseits kann ein sicherer Transport der Personen oder der Ladegüter nicht gewährleistet werden, da abrupte Lenk- oder Bremsmanövern zum Herunterfallen führen können. Außerdem können bspw. Versorgungsleitungen und Signalleitungen im vorbestimmten Bereich versehentlich getrennt oder beschädigt werden. Mittels der Notfallprozedur kann das Kraftfahrzeug in einen sicheren und kontrollierten Modus gesteuert werden, damit bspw. die Personen absteigen können und Warnsignale an andere Verkehrsteilnehmer ausgegeben werden können.

Es ist möglich, dass das Kraftfahrzeug ein fahrerloses vollautonomes Kraftfahrzeug ist.

In einem Ausführungsbeispiel wird das Überwachen bei einer Fahrgeschwindigkeit des Kraftfahrzeugs unterhalb eines vorbestimmten Geschwindigkeitsgrenzwerts (z. B. 5 km/h, 10 km/h, 15 km/h, 20 km/h) durchgeführt.

Erfindungsgemäß wird das Überwachen in Abhängigkeit von einem aktuellen Standort des Kraftfahrzeugs (z. B. bereitgestellt von einem Navigationssystem) durchgeführt.

In einem weiteren Ausführungsbeispiel weist die Notfallprozedur ein Ausgeben eines, vorzugsweise akustischen, visuellen und/oder haptischen, Warnsignals an einen Insassen des Kraftfahrzeugs auf. Der Insasse kann damit adäquat auf die entsprechende Situation reagieren und das Kraftfahrzeug bspw. abbremsen und/oder den vorbestimmten Bereich kontrollieren.

In einem weiteren Ausführungsbeispiel weist Notfallprozedur ein Ausgeben eines, vorzugsweise akustischen, visuellen und/oder haptischen, Warnsignals und/oder Datensignals an eine zentrale Leitstelle des Kraftfahrzeugs und/oder an andere Verkehrsteilnehmer im Umfeld des Kraftfahrzeugs auf. Das Datensignal kann bspw. Daten einer Überwachungseinrichtung des Kraftfahrzeugs zum Überwachen des vorbestimmen Bereichs aufweisen.

In einer Ausführungsform weist die Notfallprozedur ein Ausgeben eines, vorzugsweise akustischen, visuellen und/oder haptischen Warnsignals, an die erfasste Person und/oder den vorbestimmten Bereich auf, z. B. um die Person dazu zu bringen, den Bereich selbständig zu verlassen.

Erfindungsgemäß weist die Notfallprozedur ein Abbremsen des Kraftfahrzeugs bis zum Stillstand und/oder ein Fahren des Kraftfahrzeugs an einen Fahrbahnrand und/oder auf einen Standstreifen auf. Hier kann die Situation in sicherer Umgebung bspw. durch einen Fahrzeuginsassen oder einen herbeigerufenen Servicetechniker weiter untersucht und gelöst werden. In einer weiteren Ausführungsform weist das Verfahren ferner ein Beenden der Notfallprozedur und/oder ein Betreiben des Kraftfahrzeugs in einem (z. B. teil- oder vollautonomen) Normalbetriebsmodus auf, falls erfasst wird, dass die erfasste Person oder das erfasste Ladegut den vorbestimmen Bereich verlassen hat.

In einer weiteren Ausführungsform ist der vorbestimmte Bereich zwischen einem Fahrerhaus des Kraftfahrzeugs und einem Anhänger oder Sattelauflieger des Kraftfahrzeugs angeordnet (z. B. zwischen einer Rückwand des Fahrerhauses und einer Vorderwand des Anhängers oder Sattelaufliegers). Dieser Bereich kann genügend Platz für unerlaubte Personen oder Ladegüter bieten.

In einer Ausführungsvariante ist der vorbestimmte Bereich außen an, vorzugsweise auf, einer (z. B. voll-) autonomen und/oder fahrerlosen Zugmaschine des Kraftfahrzeugs angeordnet.

In einer weiteren Ausführungsvariante ist der vorbestimmte Bereich außen an, vorzugsweise auf, einem Anhänger oder Sattelauflieger des Kraftfahrzeugs angeordnet.

Erfindungsgemäß wird das Überwachen durch eine Überwachungseinrichtung des Kraftfahrzeugs ausgeführt, die bspw. am Kraftfahrzeug (z. B. stationär oder bewegbar) angeordnet ist.

In einem weiteren Ausführungsbeispiel weist die Überwachungseinrichtung mindestens eines von einem Spiegelersatzsystem, einer Kameravorrichtung, einem berührungsempfindlichen Taster, einer berührungsempfindlichen Sensorhaut, einem Ultraschallsensor, einer Lasersensorik, einer Lichtschranke, einem Temperatursensor, einer Staudruckdüsenvorrichtung, einer Radarvorrichtung, einem Magnetfeldsensor und einem berührungsempfindlichen Stromsensor auf.

In einer Weiterbildung ist die Überwachungseinrichtung in oder an einer Rückwand eines Fahrerhauses und/oder hinter einem Fahrerhaus des Kraftfahrzeugs (bezüglich einer Vorwärtsfahrtrichtung des Kraftfahrzeugs) angeordnet.

Es ist auch möglich, dass die Überwachungseinrichtung z. B. in oder an einem Anhänger oder Sattelauflieger des Kraftfahrzeugs und/oder an einer Oberseite eines Fahrzeugrahmens des Kraftfahrzeugs oder an einer Oberseite einer von dem Fahrzeugrahmen getragenen Komponente angeordnet ist.

In einem Ausführungsbeispiel weist die Überwachungseinrichtung mindestens zwei Überwachungseinheiten zur redundanten Überwachung des vorbestimmten Bereichs auf, die vorzugsweise unterschiedliche Messprinzipien verwenden und/oder räumlich beabstandet zueinander angeordnet sind.

Die Erfindung betrifft auch ein Kraftfahrzeug, vorzugsweise ein Nutzfahrzeug, mit einem Bordrechner, der zum Ausführen eines Verfahrens wie hierin offenbart ausgebildet ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht eines Sattelzugs;
- Figur 2: eine perspektivische Ansicht eines (voll-) autonomen Sattelzugs;
- Figur 3: eine perspektivische Ansicht einer Sattelzugmaschine; und
- Figur 4: ein beispielhaftes Ablaufdiagramm eines Verfahrens gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

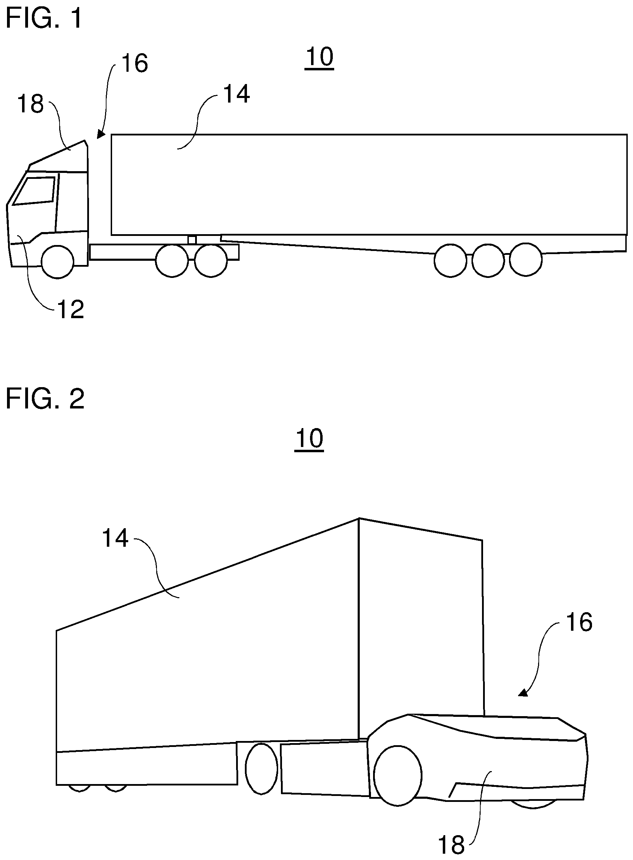

Die Figur 1 zeigt ein Kraftfahrzeug 10, das beispielhaft als ein Sattelzug ausgebildet ist. Das Kraftfahrzeug 10 kann bspw. als Nutzfahrzeug (z. B. Lastkraftwagen oder Omnibus) oder Personenkraftwagen ausgebildet sein. Bspw. kann das Kraftfahrzeug auch als Sattelzugmaschine, Hängerzugmaschine oder Hängerzug (Lastzug) ausgebildet sein.

Das Kraftfahrzeug 10 ist ein teilautonomes oder vollautonomes Kraftfahrzeug. Das Kraftfahrzeug 10 kann somit ein Fahrsystem aufweisen, das eines oder mehrere autonome Elemente aufweist, die eine Fahrzeugbewegung des Kraftfahrzeugs 10 auf einer Straße steuern können, wobei sie das Kraftfahrzeug 10 vollständig autonom (z. B. keine Fahrereingabe oder -steuerung erforderlich) oder teilweise autonom (z. B. einige Fahrereingabe oder -steuerung für das sichere Fahren erforderlich) steuern. Es ist möglich, dass ein vollautonomes Kraftfahrzeug keinen Fahrerarbeitsplatz aufweist, d. h. fahrerlos gesteuert wird, z. B. zum Gütertransport oder zur Personenbeförderung. Steuermerkmale mit beschränkter Fähigkeit zum autonomen, semiautonomen, automatisierten oder automatischen Fahren (z. B. automatisierte Fahrspurverfolgung, adaptive Fahrspurverfolgung, adaptiver Tempomat usw.) können die Position und Geschwindigkeit eines Fahrzeugs in Bezug auf die Straße und auf andere Fahrzeuge und Hindernisse auf der Straße mit verringerter Fahrereingabe oder ohne Fahrereingabe aufrechterhalten oder steuern.

Wenn das Kraftfahrzeug 10 vollautonom betrieben wird und keinen Fahrzeugführer aufweist oder der Fahrzeugführer aufgrund eines teil- oder vollautonomen Betriebsmodus nur unzureichend (oder überhaupt nicht) auf das Kraftfahrzeug 10 und dessen Umgebung achtet, kann bisher nicht sichergestellt werden, dass Personen unerlaubt auf das Kraftfahrzeug 10 springen und sich als blinde Passagiere kostenlos transportieren lassen. Es ist auch möglich, dass unerlaubt Ladegüter auf dem Kraftfahrzeug 10 abgelegt werden, um diese bspw. kostenlos transportieren zu lassen.

Bspw. können sich bei einem als Sattelzug ausgebildeten Kraftfahrzeug 10, wie in Figur 1 dargestellt, eine oder mehrere Personen oder Ladegüter in einem nicht zum Personen- und Ladeguttransport vorgesehenen und zugelassenen Bereich 16 zwischen einem Fahrerhaus 12 einer Sattelzugmaschine 18 des Kraftfahrzeugs 10 und einem Sattelauflieger 14 des Kraftfahrzeugs 10 aufhalten. Bspw. weisen Sattelzüge mit Sattelaufliegern zum Schüttguttransport einen vergleichsweise großen Bereich 16 auf. Der Bereich 16 kann zum Fahren und Rangieren erforderlich sein, um Ausgleichsbewegungen des Sattelaufliegers 14 zu ermöglichen.

Wenn sich eine oder mehrere Personen oder Ladegüter während des Betriebs des Kraftfahrzeugs 10 unerlaubt im Bereich 16 befinden, kann dies aus mehreren Gründen problematisch sein. Einerseits kann ein sicherer Transport der Personen oder der Ladegüter nicht gewährleistet werden, da die Personen oder Ladegüter bspw. bei abrupten Lenkmanövern oder Bremsmanövern vom Kraftfahrzeug 10 fallen und sich verletzen können. Außerdem können bspw. Personen oder Ladegüter, die sich in dem Bereich 16 befinden, Versorgungsleitungen und Signalleitungen, die bspw. zwischen der Sattelzugmaschine 18 und dem Sattelauflieger 14 verlaufen, versehentlich trennen oder beschädigen. Hierdurch können bspw. auch automatische Notbremsungen ausgelöst werden, die sowohl für die Person(en) und Ladegüter selbst als auch für die umliegenden Verkehrsteilnehmer gefährlich sein können.

Unter Bezugnahme auf Figur 2 ist eine perspektivische Ansicht einer aktuellen Studie für eine fahrerlose, vollautonome Sattelzugmaschine 18 gezeigt. Die Sattelzugmaschine 18 kann bspw. einen herkömmlichen Sattelauflieger 14 ziehen. Die Sattelzugmaschine 18 weist kein herkömmliches Fahrerhaus auf. Stattdessen kann bspw. die Sattelzugmaschine 18 nur noch als eine Einheit mit Antriebsmotor, Steuerung, Umgebungserfassungssensorik usw. vorgesehen sein, um das vollautonome, fahrerlose Fahren der Sattelzugmaschine 18 zu ermöglichen.

Die Oberseite der Sattelzugmaschine 18 kann als ein Hochplateau mit vorzugsweise aerodynamischer Freiformfläche gebildet sein. Somit stellt hier bspw. die Oberseite ebenfalls einen Bereich 16 dar, der von blinden Passagieren zum unerlaubten Personentransport oder zum unerlaubten Ladeguttransport genutzt werden kann.

Es wird darauf hingewiesen, dass ein Kraftfahrzeug weitere Bereiche aufweisen kann, die unerlaubt zur Personen- und/oder Güterbeförderung genutzt werden können, ohne dass diese Bereiche dazu gesetzlich zugelassen und eingerichtet sind. Hierzu zählen bspw. auch Bereiche an einem Anhänger oder Sattelauflieger des Kraftfahrzeugs (z. B. Sattelauflieger zum Transport von einem oder mehreren Kraftfahrzeugen). Auch diese Bereiche können wie hierin offenbart auf die Anwesenheit von Personen oder Ladegütern hin überwacht werden.

Die vorliegende Offenbarung schlägt vor, dass überwacht wird, ob sich Personen oder Ladegüter unerlaubt Zugang zu einem im autonomen Fahrbetrieb befindlichen Kraftfahrzeug 10 verschaffen und sich unerlaubt auf dem Kraftfahrzeug 10 aufhalten. Sofern erfasst wird, dass sich eine Person oder ein Ladegut in einem vorbestimmten, nicht zum Personen- oder Gütertransport zugelassenen und vorgesehenen Bereich 16 befindet, wird automatisch eine vorbestimmte Notfallprozedur ausgeführt.

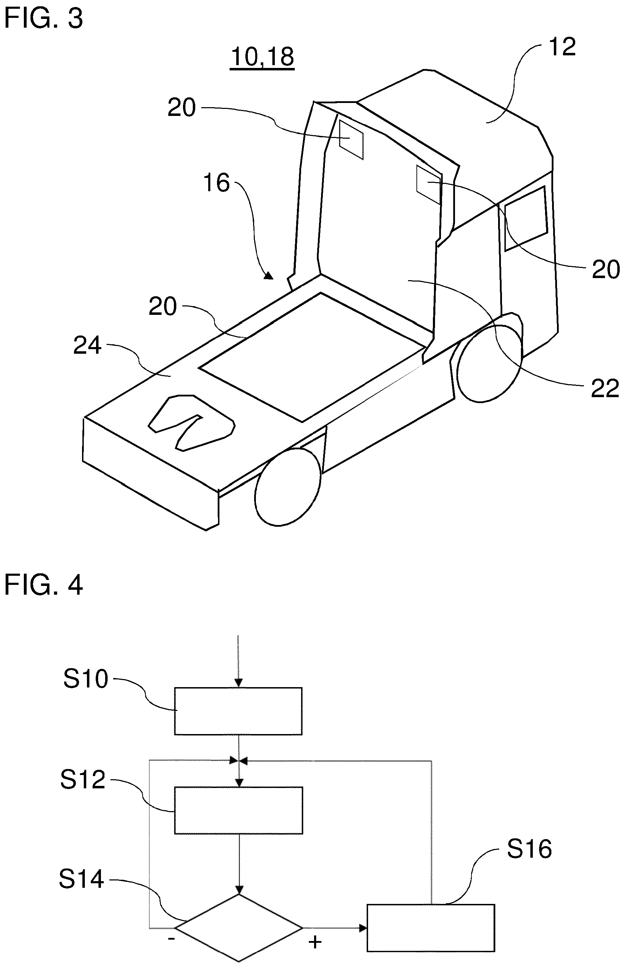

In Figur 3 ist beispielhaft gezeigt, wie der Bereich 16 zwischen dem Fahrerhaus 12 und dem Sattelauflieger 14 (siehe auch Figur 1) überwacht werden kann.

Das Kraftfahrzeug 10 bzw. die Sattelzugmaschine 18 kann eine Überwachungseinrichtung 20 mit einer oder mehreren Überwachungseinheiten aufweisen.

Die Überwachungseinrichtung 20 ist dazu ausgebildet den vorbestimmten Bereich 16 des Kraftfahrzeugs 10, der nicht zum Personen- und/oder Gütertransport zugelassen und/oder vorgesehen ist, auf die Anwesenheit von Personen oder Ladegütern hin zu überwachen.

Bspw. kann die Überwachungseinrichtung 20 in oder an einer Rückwand 22 des Fahrerhauses 12 angeordnet und zweckmäßig auf den Bereich 16 gerichtet sein. Alternativ oder zusätzlich kann die Überwachungseinrichtung 20 auch an einer Oberseite 24 eines Fahrzeugrahmens oder einer vom Fahrzeugrahmen getragenen Komponente (z. B. Tank oder Radlauf) angeordnet sein.

Die vorliegende Offenbarung ist nicht auf eine bestimmte Technik oder ein bestimmtes Messprinzip zur Überwachung beschränkt. Es können berührungslose und berührungssensitive Überwachungseinheiten sowie Kombinationen davon verwendet werden.

Die Überwachungseinrichtung 20 kann bspw. einen mechanischer Taster, einen Druccknopf oder eine Druckleiste aufweisen. Auf begehbare Flächen im Bereich 16 können bspw. Drucktaster in folgender Weise eingebaut sein. Es können einzelne Drucktaster oder Druckknöpfe verteilt in einem Abstand, der von Menschen jeder Altersstufe sicher betätigt wird, angeordnet sein. Es können Drucktaster unter einer Fläche, die bei Berührung der Fläche betätigt wird (z. B. ähnlich wie ein Fußschalter) angeordnet sein. Die zweckmäßig begehbare Fläche kann beliebige Formen aufweisen, wie z. B. schmale und breite Rechteckformen oder Freiformflächen. Hierbei ist es auch möglich, dass je nach Größe der druckempfindlichen Überwachungseinrichtung 20 z. B. in der Mitte und am Rand Taster o.ä. angebracht sind. Es ist möglich, dass eine Betätigung der Drucktaster oder eine Signalausgabe oder Signalverarbeitung erst ab einem Mindestgewicht oder einer Mindestkraft erfolgt, sodass z. B. Falschmeldung durch kleine Tiere (z. B. Marder, Eichhörnchen) vermieden werden können.

Die Überwachungseinrichtung 20 kann auch ein Schaltfeld oder eine Sensorhaut aufweisen. Bei dieser Lösung können bspw. begehbare Flächen entweder komplett oder teilweise mit einer Sensorhaut (wie z. B. bei einem Roboter, siehe BOSCH APAS) überzogen werden. Mit Hilfe dieser Sensorhaut können zum einem Berührungen für die Betätigung wie auch Fehlbelegungen jeglicher Art erkannt werden. Die Sensorhaut kann bspw. auch als eine Fußbodenmatte oder Teil einer Fußbodenmatte ausgebildet sein, die fest montiert ist.

Die Überwachungseinrichtung 20 kann auch einen berührungslosen Sensor aufweisen. Hierbei können bspw. Bewegungen oder eine Präsenz von Personen oder Ladegütern erkannt werden. Dabei können bspw. folgende Wirkprinzipien verwendet werden: Ultraschall (ähnlich Park- oder Abstandssensor), Entfernungsmessung durch Laserstrahl, Unterbrechung einer Lichtschranke, Messung einer Temperatur, Staudruckdüsen, Radar, Laserscanner, Kameravorrichtung, Magnetfelderkennung.

Bspw. kann ein Einbau eines Ultraschallsensors an oder in der Rückwand 22 des LKW-Fahrerhauses 12 oder in einer Fläche eingebaut werden, die bspw. eine größtmögliche Abdeckung der zu überwachenden Flächen, keine toten Winkel im zu überwachenden Bereich und/oder einen Mindestabstand zu horizontalen Flächen aufweisen, damit bspw. Witterungsbedingungen keinen Einfluss haben (z. B. liegengebliebener Schnee).

Bei einer der Laserstrahlmessung zur Entfernungsmessung können bspw. zwei Möglichkeiten zum Verwenden und Justieren des Lasers bestehen. Einerseits kann eine Entfernung zwischen einer Laserquelle und einem Auftreffpunkt immer konstant und anderseits kann eine Entfernung zwischen einer Laserquelle und einem Auftreffpunkt variiert werden. In beiden Fällen kann der Laserstahl von einer Person unterbrochen und damit die Entfernung zum Auftreffpunkt verkürzt werden. Dies kann ausgewertet und bspw. an einen Bordrechner als Signal gesendet. Im ersten Fall kann die Laserquelle so justiert sein, dass ein Laserstrahl vom Einbauort in einem Luftbereich bzw. im Bereich 16 zwischen dem Fahrerhaus 12 und dem Sattelauflieger 14 (siehe Figur 1) liegt und einen oder mehrere feste Auftreffpunkte hat. Je nach Größe des zu überwachenden Bereichs können mehrere Laserquellen verwendet werden. In zweiten Fall kann der Auftreffpunkt variabel sein, z. B. weil er am Sattelauflieger 14 positioniert ist. Bspw. kann in Abhängigkeit von Standort-, Geo- und Straßendaten (z. B. Kurve, Abbiegen wegen Route), die bspw. über ein Navigationssystem bereitgestellt werden, und/oder einem Lenkradeinschlägen ermittelt werden, wann eine Bewegung stattfindet und welche Entfernung zwischen der Laserquelle und dem Auftreffpunkt noch zulässig ist. Dieses Prinzip kann auch bei der Verwendung einer Sensorik (z. B. eines Ultraschallsensors oder einer Lasermessung) angewendet werden, bei der eine Wegstrecke oder ein Entfernungsbereich gemessen wird.

Bei einem Einbau von einer oder mehrerer Lichtschranken bspw. im Bereich 16 kann diese von einer Person oder einem Ladegut unterbrochen werden, sodass die unerlaubte Anwesenheit der Person oder des Ladeguts sicher detektiert werden kann.

Bei einer Messung mittels Temperatur kann bspw. mittels mehrerer Temperatursensoren ein Temperaturprofil für eine Fläche oder eine Bereich erstellt werden, das sich lokal ändert, wenn sich bspw. eine Person darauf befindet. Die Änderung wird dadurch ermittelt, dass sich der Wärmestrom an der belegten Stelle in Verhältnis zu benachbarten Stellen ändert. Je nach Witterung und Außentemperaturen kann bspw. ein Wärmeeintrag oder Wärmestau vorliegen.

Im Fall von Staudüsen können auf begehbaren Flächen bspw. im Bereich 16 mehrere Luftdüsen angebracht sein, die zueinander so weit entfernt sind, dass eine Person detektiert wird. Durch die Luftdüsen wird Luft ausgeblasen. Dies kann kontinuierlich oder intervallmäßig erfolgen. Wenn eine Person vorhanden ist, wird die Luftdüse versperrt. Durch Messung des Luftstroms oder -drucks wird ermittelt, wann dieser Fall vorliegt und ein entsprechendes Signal kann ausgegeben werden. Wichtig hierbei kann sein, dass entweder eine oder mehrere Düsen diesen Fall erkennen können. Ein weiterer Vorteil ist, dass Schnee entfernt werden kann. Die Staudüsen können bspw. an einer bereits in vielen Nutzfahrzeugen installierten Druckluftquelle angeschlossen sein.

Im Falle von Radar oder Laserscanner kann bspw. ein 2D- oder 3D-Abbild des zu überwachenden Raums erstellt werden. Wenn eine Person anwesend ist, wird diese durch Abgleich mit einem Urbild erkannt und ein Signal wird ausgegeben.

Bei der Verwendung einer Kameravorrichtung kann das von der Kameravorrichtung aufgenommene (bewegte) Bild einem Bilderkennungssystem zur Erkennung von Personen und Objekten bspw. im Bereich 16 zugeführt werden. Es kann vorteilhaft sein, eine Kameravorrichtung mit mehreren räumlich getrennten Kameras zu verwenden, um bei einer Blendung einer Kamera bspw. durch einen Laserpointer oder die Sonne, weiterhin eine Überwachung durch die andere Kamera zu ermöglichen.

Bei einer Magnetfelderkennung kann ein Magnetfeld aufgebaut und danach erfasst werden, ob sich metallische Teile (z. B. Gürtelschalle, Münzen) in der Nähe befinden und das Magnetfeld beeinflussen. Im Falle einer Erfassung eines metallischen Teils kann ein Signal ausgegeben werden.

Es ist auch möglich, dass die Überwachungseinrichtung 20 bspw. den Bereich 16 mittels Erfassung elektrischer Größen überwacht, z. B. Stromflussmessung, Messung eines Drahtwiderstands, Piezoelement. Bei der ersten Lösung (Stromflussmessung) können bspw. zwei Sensoren bzw. Elektroden eingesetzt werden, die bei Berühren einen Stromkreis schließen und über den gemessenen Widerstand eine menschliche Berührung erkennen können. Bei der zweiten Lösung (Messung eines Drahtwiderstands) können Drähte oder Drahtnetze so gespannt sein, dass diese beim Aufsteigen eine zu überwindende Sperre darstellen. Vorzugsweise sind die Drähte nicht fest zwischen Sattelzugmaschine 18 und Sattelauflieger 14 gespannt. Beim Besteigen eines Drahtes kann sich dieser leicht verformt und der Stromwiderstand ändert sich. Dieses Merkmal kann zur Erfassung herangezogen werden. Bei der dritten Lösung (Piezoelement) kann durch Druck ein elektrischer Impuls in einem Piezoelement ausgelöst werden, das z. B. als Folie ausgebildet ist. Ab Überschreitung eines vorbestimmten Schwellwerts kann ein Ausgabesignal erzeugt werden.

Alternativ oder zusätzlich kann auch eine bestehende Sensorik zur Überwachung bspw. des Bereichs 16 verwendet werden. Z. B. kann im Falle eines kameragestützen Spiegelersatzsystems deren aufgenommenes Bild entsprechend einem Bilderkennungssystem zugeführt werden.

Zweckmäßig kann die Überwachungseinrichtung 10 mindestens zwei Überwachungseinheiten aufweisen, die bspw. räumlich getrennt angeordnet sind und/oder unterschiedliche Wirkprinzipien aufweisen. Damit kann eine redundante Überwachung des Bereichs 16 gewährleistet werden. So kann bspw. verhindert werden, dass die Überwachungseinrichtung 20 durch Fehleinflüsse (z. B. Sonnenlicht, Blendlicht, Verdeckung Kameralinse usw.) aktiv oder unbewusst getäuscht wird. Bspw. kann die Überwachungseinrichtung 20 eine Kombination von mechanischen Erkennung über Druck und einem optischen System aufweisen. Mit Hilfe des Drucksensors kann überprüft werden, ob sich Personen oder Ladegüter auf einer begehbaren Oberfläche im Bereich 16 befinden. Zur Sicherheit kann ein optisches System, z. B. Kameravorrichtung, zugeschaltet werden.

Die Figur 4 zeigt einen beispielhaften Ablauf eines Verfahrens gemäß der vorliegenden Offenbarung.

In einem Verfahrensschritt S10 wird das Kraftfahrzeug 10 in einem teilautonomen oder vollautonomen Betriebsmodus betrieben. Zweckmäßig ist im teilautonomen Betriebsmodus ein Fahreingriff durch einen Insassen des Kraftfahrzeugs zum Fahren (Lenken, Bremsen, Beschleunigen usw.) des Kraftfahrzeugs 10 nicht notwendig. Das Kraftfahrzeug 10 kann bspw. auch vollautonom und fahrerlos im Verfahrensschritt S10 betrieben werden (siehe bspw. Figur 2).

In einem Verfahrensschritt S12 wird der vorbestimmte, nicht zur Personen- und/oder Ladegutbeförderung gesetzlich zugelassene und/oder vorgesehene Bereich 16 mittels der Überwachungseinrichtung 20 überwacht.

Es ist möglich, dass die Überwachung im Verfahrensschritt S12 dauerhaft, temporär, periodisch und/oder ereignisgesteuert ist. Ein auslösendes Ereignis kann bspw. eine Fahrgeschwindigkeit des Kraftfahrzeugs 10 unterhalb einer vorbestimmten Grenzgeschwindigkeit (z. B. 20 km/h) sein. Erfindungsgemäß ist ein auslösendes Ereignis ein aktueller Standort des Kraftfahrzeugs 10, der bspw. über ein Navigationssystem des Kraftfahrzeugs 10 bereitgestellt wird.

Bspw. kann ein unerlaubtes Zusteigen einer Person oder ein unerlaubtes Beladen bei niedrigen Geschwindigkeiten oder im Stillstand des Kraftfahrzeugs 10 erfolgen (z. B. Stau, Ampel). Bspw. kann auch unmittelbar vor dem Anfahren an einem Ladungsumladepunkt der Verfahrensschritt S12 durchgeführt werden.

Im Verfahrensschritt S14 wird bestimmt, ob eine Person und/oder ein Ladegut in dem Bereich 16 durch die Überwachungseinrichtung 20 erfasst wurde (+) oder nicht (-). Sofern keine Person und/oder kein Ladegut erfasst wurde (-), kann bspw. mit dem Verfahrensschritt S12 fortgefahren und die Überwachung des Bereichs 16 fortgesetzt werden. Wenn eine Person und/oder ein Ladegut in dem Bereich 16 erfasst wurde (+), wird das Verfahren mit einem Verfahrensschritt S16 fortgesetzt. Der Verfahrensschritt S14 kann bspw. von einem Bordrechner des Kraftfahrzeugs 10 durchgeführt werden. Der Bordrechner kann bspw. auch ein Zusatzmodul mit Rechnerintelligenz zum Ausführen des Verfahrens aufweisen.

Im Verfahrensschritt S16 wird eine Notfallprozedur durchgeführt, um auf die unerlaubte Anwesenheit einer Person oder von Ladegut im dem Bereich 16 zu reagieren. Die Notfallprozedur kann unterschiedliche Verfahrensschritte einzeln oder in Kombination aufweisen.

Die Notfallprozedur kann bspw. ein Ausgeben eines Warnsignals aufweisen. Das Warnsignal kann bspw. akustisch, visuell und/oder haptisch sein.

Das Warnsignal kann an einen Insassen des Kraftfahrzeugs 10 ausgeben werden, sofern vorhanden. Der gewarnte Insasse kann dann bspw. das Kraftfahrzeug 10 manuell abbremsen und abstellen und die Situation prüfen. Es ist auch möglich, dass der gewarnte Insasse eine automatische Ausführung bspw. eines sanften Abbremsmanövers usw. bestätigt.

Das Warnsignal kann auch an eine zentrale Leitstelle (z. B. Servicecenter) des Kraftfahrzeugs 10 oder an andere Verkehrsteilnehmer (z. B. andere Kraftfahrzeuge) im Umfeld des Kraftfahrzeus 10 übermittelt werden (z. B. Aktivieren einer Warnblinkanlage des Kraftfahrzeugs 10). Damit können andere Verkehrsteilnehmer gewarnt werden, sodass diese bspw. automatisch Abbremsen und/oder einen Abstand zum Kraftfahrzeug 10 erhöhen. Es ist auch möglich, dass die Leitstelle bspw. einen Servicetechniker anweist, bei einem vollautonomen Kraftfahrzeug 10 die Situation vor Ort oder per Fernwartung zu prüfen.

Das Warnsignal kann auch an die erfasste Person und/oder in Richtung zu dem vorbestimmten Bereich 16 ausgegeben werden, um bspw. ein selbständiges Verlassen des Bereichs 16 durch die erfasste Person zu bewirken.

Die Notfallprozedur kann auch ein automatisches Fahrmanöver aufweisen. Hierbei kann das Kraftfahrzeug 10 bspw. sanft bis zum Stillstand abgebremst und an einen Fahrbahnrand und/oder auf einen Standstreifen gefahren werden.

Sobald die Notfallprozedur erfolgreich durchgeführt wurde und erfasst wird, dass die Person oder das Ladegut den Bereich 16 verlassen hat, kann das Kraftfahrzeug 10 bspw. wieder anfahren und ein gewünschtes Ziel ansteuern.

Die Erfindung ist nicht auf die vorstehend beschriebenen bevorzugten Ausführungsbeispiele beschränkt.

### Bezugszeichenliste

- 10: Kraftfahrzeug
- 12: Fahrerhaus
- 14: Sattelauflieger
- 16: vorbestimmter Bereich
- 18: (Sattel-) Zugmaschine
- 20: Überwachungseinrichtung
- 22: Rückwand
- 24: Oberseite
- S10-S16: Verfahrensschritte

## Patentansprüche

1. Verfahren zum Überwachen eines vollautonomen oder teilautonomen Kraftfahrzeugs (10), vorzugsweise Nutzfahrzeugs, aufweisend:
Überwachen, durch eine Überwachungseinrichtung (20) des Kraftfahrzeugs (10), eines vorbestimmten Bereichs (16) außen am Kraftfahrzeug (10), der nicht zur Personenbeförderung und/oder Güterbeförderung zugelassen und/oder eingerichtet ist, zum Erfassen einer Person oder eines Ladeguts in dem vorbestimmten Bereich (16), während eines teilautonomen oder vollautonomen Betriebs des Kraftfahrzeugs (10);
wobei das Überwachen in Abhängigkeit von einem aktuellen Standort des Kraftfahrzeugs (10) durchgeführt wird; und
Ausführen einer vorbestimmten Notfallprozedur, falls eine Person oder ein Ladegut in dem vorbestimmten Bereich (16) erfasst wird, wobei die Notfallprozedur aufweist:
Abbremsen des Kraftfahrzeugs (10) bis zum Stillstand; und/oder
Fahren des Kraftfahrzeugs (10) an einen Fahrbahnrand und/oder auf einen Standstreifen.

2. Verfahren nach Anspruch 1, wobei das Überwachen durchgeführt wird:
bei einer Fahrgeschwindigkeit des Kraftfahrzeugs (10) unterhalb eines vorbestimmten Geschwindigkeitsgrenzwerts.

3. Verfahren nach Anspruch 1 oder 2, wobei die Notfallprozedur aufweist:
Ausgeben eines, vorzugsweise akustischen, visuellen und/oder haptischen, Warnsignals an einen Insassen des Kraftfahrzeugs (10).

4. Verfahren nach einem der vorherigen Ansprüche, wobei die Notfallprozedur aufweist:
Ausgeben eines, vorzugsweise akustischen, visuellen und/oder haptischen, Warnsignals und/oder Datensignals an eine zentrale Leitstelle des Kraftfahrzeugs (10) und/oder an andere Verkehrsteilnehmer im Umfeld des Kraftfahrzeugs (10).

5. Verfahren nach einem der vorherigen Ansprüche, wobei die Notfallprozedur aufweist:
Ausgeben eines, vorzugsweise akustischen, visuellen und/oder haptischen Warnsignals, an die erfasste Person und/oder den vorbestimmten Bereich (16).

6. Verfahren nach einem der vorherigen Ansprüche, ferner aufweisend:
Beenden der Notfallprozedur und/oder Betreiben des Kraftfahrzeugs (10) in einem Normalbetriebsmodus, falls erfasst wird, dass die erfasste Person oder das erfasste Ladegut den vorbestimmen Bereich (16) verlassen hat.

7. Verfahren nach einem der vorherigen Ansprüche, wobei:
der vorbestimmte Bereich (16) zwischen einem Fahrerhaus (12) des Kraftfahrzeugs (10) und einem Anhänger oder Sattelauflieger (14) des Kraftfahrzeugs (10) angeordnet ist.

8. Verfahren nach einem der vorherigen Ansprüche, wobei:
der vorbestimmte Bereich (16) außen an, vorzugsweise auf, einer autonomen und/oder fahrerlosen Zugmaschine (18) des Kraftfahrzeugs (10) angeordnet ist.

9. Verfahren nach einem der vorherigen Ansprüche, wobei:
der vorbestimmte Bereich (16) außen an, vorzugsweise auf, einem Anhänger oder Sattelauflieger (14) des Kraftfahrzeugs (10) angeordnet ist.

10. Verfahren nach einem der vorherigen Ansprüche, wobei die Überwachungseinrichtung (20) mindestens eines aufweist von:
einem Spiegelersatzsystem, einer Kameravorrichtung, einem berührungsempfindlichen Taster, einer berührungsempfindlichen Sensorhaut, einem Ultraschallsensor, einer Lasersensorik, einer Lichtschranke, einem Temperatursensor, einer Staudruckdüsenvorrichtung, einer Radarvorrichtung, einem Magnetfeldsensor und einem berührungsempfindlichen Stromsensor.

11. Verfahren nach einem der vorherigen Ansprüche, wobei:
die Überwachungseinrichtung (20) in oder an einer Rückwand (22) eines Fahrerhauses (12) und/oder hinter einem Fahrerhaus (12) des Kraftfahrzeugs (10) angeordnet ist.

12. Verfahren nach einem der vorherigen Ansprüche, wobei:
die Überwachungseinrichtung (20) mindestens zwei Überwachungseinheiten zur redundanten Überwachung des vorbestimmten Bereichs (16) aufweist, die unterschiedliche Messprinzipien verwenden und/oder räumlich beabstandet zueinander angeordnet sind.

13. Kraftfahrzeug (10), vorzugsweise Nutzfahrzeug, mit einem Bordrechner, der zum Ausführen eines Verfahrens nach einem der vorherigen Ansprüche ausgebildet ist.

## Claims

1. Method for surveillance of a fully autonomous or semi-autonomous motor vehicle (10), preferably a utility vehicle, comprising
surveillance, by a surveillance device (20) of the motor vehicle (10), of a predetermined area (16) on the outside of the motor vehicle (10), which is not authorized and/or configured for transporting persons and/or transporting goods, for detecting a person or a load in the predetermined area (16), during semi-autonomous or fully autonomous operation of the motor vehicle (10);
wherein the surveillance is performed in dependence on a current location of the motor vehicle (10); and
executing a predetermined emergency procedure if a person or a load is detected in the predetermined area (16), wherein the emergency procedure comprises
braking the motor vehicle (10) to a stop; and/or
driving the motor vehicle (10) to the edge of the road and/or to an emergency lane.

2. Method according to claim 1, wherein the surveillance is carried out
at a driving speed of the motor vehicle (10) below a predetermined speed limit.

3. Method according to claim 1 or 2, wherein the emergency procedure comprises:
Issuing a, preferably audible, visual and/or haptic, warning signal to an occupant of the motor vehicle (10).

4. Method according to one of the preceding claims, wherein the emergency procedure comprises:
Outputting a, preferably acoustic, visual and/or haptic, warning signal and/or data signal to a central control center of the motor vehicle (10) and/or to other road users in the vicinity of the motor vehicle (10).

5. Method according to one of the preceding claims, wherein the emergency procedure comprises:
Outputting a, preferably acoustic, visual and/or haptic warning signal, to the detected person and/or the predetermined area (16).

6. Method according to any of the preceding claims, further comprising:
Terminating the emergency procedure and/or operating the motor vehicle (10) in a normal operating mode, if it is detected that the detected person or the detected load has left the predetermined area (16).

7. Method according to one of the preceding claims, wherein:
the predetermined area (16) is arranged between a driver's cab (12) of the motor vehicle (10) and a trailer or semi-trailer (14) of the motor vehicle (10).

8. Method according to one of the preceding claims, wherein:
the predetermined area (16) is arranged on the outside of, preferably on, an autonomous and/or driverless tractor (18) of the motor vehicle (10).

9. Method according to any of the preceding claims, wherein:
the predetermined area (16) is arranged on the outside of, preferably on, a trailer or semi-trailer (14) of the motor vehicle (10).

10. Method according to one of the preceding claims, wherein the monitoring device (20) comprises at least one of:
a mirror replacement system, a camera device, a touch sensitive button, a touch sensitive sensor skin, an ultrasonic sensor, a laser sensor, a light barrier, a temperature sensor, a ram pressure nozzle device, a radar device, a magnetic field sensor and a touch sensitive current sensor.

11. Method according to one of the preceding claims, wherein:
the monitoring device (20) is arranged in or on a rear wall (22) of a driver's cab (12) and/or behind a driver's cab (12) of the motor vehicle (10).

12. Method according to one of the preceding claims, wherein:
the monitoring device (20) comprises at least two monitoring units for redundant surveillance of the predetermined area (16), which use different measuring principles and/or are arranged spatially spaced-apart from each other.

13. Motor vehicle (10), preferably a utility vehicle, having an on-board computer which is designed to carry out a method according to one of the preceding claims.

## Revendications

1. Procédé de surveillance d'un véhicule automobile entièrement autonome ou partiellement autonome (10), de préférence un véhicule utilitaire, comprenant :
la surveillance, par un dispositif de surveillance (20) du véhicule automobile (10), d'une zone prédéterminée (16) à l'extérieur du véhicule automobile (10), laquelle n'est pas autorisée et/ou conçue pour le transport de personnes et/ou le transport de marchandises, pour détecter une personne ou un chargement dans la zone prédéterminée (16), pendant un fonctionnement partiellement autonome ou totalement autonome du véhicule automobile (10) ;
dans lequel la surveillance est effectuée en fonction d'un emplacement actuel du véhicule automobile (10) ; et
l'exécution d'une procédure d'urgence prédéterminée si une personne ou un chargement est détecté dans la zone prédéterminée (16), la procédure d'urgence comprenant :
le freinage du véhicule automobile (10) jusqu'à l'arrêt ; et/ou
la conduite du véhicule automobile (10) vers un bord de chaussée et/ou jusqu'à une bande d'arrêt d'urgence.

2. Procédé selon la revendication 1, dans lequel la surveillance est effectuée :
à une vitesse de déplacement du véhicule automobile (10) inférieure à une valeur limite de vitesse prédéterminée.

3. Procédé selon la revendication 1 ou 2, dans lequel la procédure d'urgence comprend :
l'émission d'un signal d'avertissement, de préférence acoustique, visuel et/ou haptique, à destination d'un occupant du véhicule automobile (10).

4. Procédé selon l'une quelconque des revendications précédentes, dans lequel la procédure d'urgence comprend :
l'émission d'un signal d'avertissement et/ou d'un signal de données de préférence acoustique, visuel et/ou haptique à destination d'un poste de commande central du véhicule automobile (10) et/ou d'autres usagers de la route dans l'environnement du véhicule automobile (10).

5. Procédé selon l'une quelconque des revendications précédentes, dans lequel la procédure d'urgence comprend :
l'émission d'un signal d'avertissement, de préférence acoustique, visuel et/ou haptique, à destination de la personne détectée et/ou de la zone prédéterminée (16).

6. Procédé selon l'une quelconque des revendications précédentes, comprenant en outre :
l'arrêt de la procédure d'urgence et/ou le fonctionnement du véhicule automobile (10) dans un mode de fonctionnement normal s'il est détecté que la personne détectée ou le chargement détecté a quitté la zone prédéterminée (16).

7. Procédé selon l'une quelconque des revendications précédentes, dans lequel :
la zone prédéterminée (16) est disposée entre une cabine de conduite (12) du véhicule automobile (10) et une remorque ou une semi-remorque (14) du véhicule automobile (10).

8. Procédé selon l'une quelconque des revendications précédentes, dans lequel :
la zone prédéterminée (16) est disposée à l'extérieur, de préférence sur un tracteur autonome et/ou sans conducteur (18) du véhicule automobile (10).

9. Procédé selon l'une quelconque des revendications précédentes, dans lequel :
la zone prédéterminée (16) est disposée à l'extérieur, de préférence sur une remorque ou une semi-remorque (14) du véhicule automobile (10).

10. Procédé selon l'une quelconque des revendications précédentes, dans lequel le dispositif de surveillance (20) comporte au moins l'un des éléments suivants :
un système de remplacement de rétroviseur, un dispositif à caméra, un bouton tactile, une peau sensorielle tactile, un capteur à ultrasons, un système de capteurs laser, une barrière lumineuse, un capteur de température, un dispositif à buse de pression dynamique, un dispositif radar, un capteur de champ magnétique et un capteur de courant sensible au toucher.

11. Procédé selon l'une quelconque des revendications précédentes, dans lequel :
le dispositif de surveillance (20) est disposé dans ou sur une paroi arrière (22) d'une cabine de conduite (12) et/ou derrière une cabine de conduite (12) du véhicule automobile (10).

12. Procédé selon l'une quelconque des revendications précédentes, dans lequel :
le dispositif de surveillance (20) comporte au moins deux unités de surveillance pour la surveillance redondante de la zone prédéterminée (16), lesquelles utilisent des principes de mesure différents et/ou sont disposées à distance l'une de l'autre dans l'espace.

13. Véhicule automobile (10), de préférence véhicule utilitaire, comportant un ordinateur de bord qui est conçu pour la mise en œuvre d'un procédé selon l'une quelconque des revendications précédentes.
